Europäisches Patentamt

European Patent Office

Office européen des brevets

(11) Publication number: **0 104 743**
A2

(12) # EUROPEAN PATENT APPLICATION

(21) Application number: 83304754.1

(22) Date of filing: 17.08.83

(51) Int. Cl.³: **A 21 D 13/00**

(30) Priority: 01.09.82 US 413888

(43) Date of publication of application:
04.04.84 Bulletin 84/14

(84) Designated Contracting States:
BE DE FR GB IT LU NL

(71) Applicant: SCHWAN'S SALES ENTERPRISES, INC.
115 West College Drive
Marshall Minnesota 56258(US)

(72) Inventor: Ricke, Roy R.
934 Marymount
Salina Kansas 67401(US)

(74) Representative: Cheyne, John Robert Alexander
Mackenzie et al,
HASELTINE LAKE & CO. 28 Southampton Buildings
Chancery Lane
London WC2A 1AT(GB)

(54) Laminate pizza crust.

(57) A baked pizza shell can be formed by blending a suitable leavened dough, forming a sheet of dough, applying a layer of fat onto the dough sheet, forming the dough into a dough piece having at least one roll, sheeting the dough piece, laminating the sheeted dough by forming overlapping layers of the dough, sheeting the dough laminate, cutting the sheet into pizza sections, baking and applying pizza toppings to the shell.

EP 0 104 743 A2

0104743

## LAMINATE PIZZA CRUST

### Field of the Invention

The invention relates to baked pizza crust having improved properties for the home consumer pizza market, and its manufacture.

### Background of the Invention

Pizza is a popular food since it is tasty, convenient, and easy to prepare. Frozen pizzas can be purchased at supermarkets and can be conveniently reheated at home in short periods of time before consumption. While frozen pizza is a convenient popular food, it has encountered substantial consumer resistance since it does not always compare favorably to pizzeria pizzas or those made at home from basic ingredients such as flour, water, yeast, tomato sauce, cheese, meat, and other condiments. In other words, frozen pizzas are often purchased for convenience rather than flavor.

Consumer resistance to prepared frozen pizza is commonly directed to the quality of the shell or crust after baking. Initially, pizza shells or crusts comprising generally circular sections of dough were prebaked at the factory, topped with pizza toppings, quick frozen and stored until sale. Upon reheating consumers often found that the prebaked shells commonly became soggy and would not become crispy during baking or tended to be tough, hard, brittle and cracker-like. In the face of such substantial consumer resistance, many pizza manufacturers developed pizza shells or crusts that were fried in oil prior to the application of pizza topping. Since fried pizza crusts have an agreeable crispy texture many consumer and production related objections have been solved, but the fried crusts still possess certain drawbacks.

In our research we have found during frying of pizza shaped dough sections, substantial amounts of oil could be

- 2 -

absorbed. The oil content and cooking extent of fried crusts led to a product which did not have the desired home-cooked or pizzeria-cooked taste and texture desired in pizza by certain consumers.

We have found that consumers desire (1) that a baked pizza crust be moist and not soggy, (2) that the crust brown during baking, (3) that the crust bakes to a firm crust having substantially firm texture without becoming unacceptably crisp, and that the internal structure of the crust have a structural appearance which adds to the taste and texture of the dough.

### Brief Discussion of the Invention

We have developed a laminated crust and have found a method for preparing laminate pizza crust that substantially avoids the problems of many prior art baked or fried pizza crusts and which can provide the characteristics consumers desire in pizza shells. Briefly, the method for making pizza shells comprises blending a suitable dough, forming a sheet of dough, applying a layer of fat onto the dough sheet, forming the dough into at least one roll, sheeting the rolled dough, laminating the sheeted dough, sheeting the dough laminate, cutting the sheet into pizza sections, baking, applying pizza toppings to the baked shells, and freezing the pizza for sale.

### Detailed Discussion of the Invention

#### Compounding the Dough

Dough used in the practice of this invention is commonly yeast leavened. Formulating yeast leavened dough is well known in the baking art. It is well established that for leavening to take place or the yeast and some nutritive material to sustain yeast activity should be present in a dough mixture. This nutritive material can be sugars or saccharides within the dough or can be yeast-nutritive carbohydrate material added to the dough such as sucrose, malt syrup, maltodextrins, corn syrup, or other sugary sources. A wide variety of flours, such as corn, wheat, oat, soy, etc. and yeasts are commonly available for use in the yeast leavened doughs. Commercially available yeasts are generally available as dried or compressed products. When using compressed yeast it is common practice in mixing the dough to adjust the temperature of the water added to the flour so that the temperature of the dough at the end of the mixing period is sufficient to activate the yeast, about 80-100° F. (about 25-40° C.). When using dry yeast, it is common practice to hydrate the yeast in water having an elevated temperature of up to about 150° F. (about 70° C.) for purposes of activating the yeast. The temperature of the other ingredients including additional water, flour, sugar, oil, etc. added to the dough can often be adjusted so that the temperature of the dough at the end of the mixing period is such that the action of the yeast is not harmed. Commonly, temperatures of at least about 60° F. (about 15° C.), preferably about 80° F. (about 25° C.) or higher can be used. However, the temperature of the dough cannot become so high, commonly about 200° F. (about 95° C.) that the yeast is substantially denatured and can no longer leaven the dough. In order to improve handling characteristics of the dough, dough conditioners and other additives are often added to the dough mass.

A preferred composition for the dough comprises wheat flour, water, yeast, sugar, salt, vegetable oil, and dough conditioner. All of these ingredients can be blended together for a sufficient period to result in a well shortened but nontough, glutinous mass. After blending the dough can be held at about 80-100° F. (about 25-40° C.) for about 30 minutes in order to activate the yeast. Alternatively, a beer of the water, sugar and yeast can be pre-blended at about 80-100° F. (about 25-40° C.) in order to activate the yeast for about 30 minutes. After activation, the flour, salt, oil, and other ingredients can be added to the yeast beer suspension and can be blended until the dough is well shortened. Control of pH can often be important to proper leavening actino. Maintaining pH at slightly acidic pH, less than about 6.0, preferably about 4.0 to 6.0, can be important for proper leavening action.

Common rotary or industrial blenders can be used such as batch mixers or continuous Ribbon blenders. Using batch mixers that are well known in the commercial baking field, batches ranging from about 200 to 3000 lbs. (90 to 1350 kg) per batch can be made. Alternatively, using a continuous dough mixer, having the ingredients added to the mixture continuously at proper ratios, the continual production of dough can be expected in a range of about 900 to 4000 lbs. (400-1800 kg) of dough per hour. In operating continuous dough blending systems, ingredients must be added to the mixer in appropriate ratios and rates, and the dough product removed at a correspondingly appropriate rate.

### Forming Dough Sheet

The fully mixed dough can be transferred to means for extruding a relatively thin, continuous dough web having approximate dimensions between about 20 to 60 inches (about 50 to 150 cm), preferably 25 to 35 inches (60 to 90 cm) in width and a depth of from about 1/8 to 1 inch (about 0.3 to 2.5 cm), preferably 3/16 to 1/2 inch (5 to 13 mm). A variety of extrusion devices of this sort are available, using screw-type or piston-type devices for providing the dough under pressure to the extrusion orifice. The extrusion orifice is generally of the size and/or slightly smaller than the desired dimensions of the dough web. A highly desirable extruder means is one that can provide dough under pressure while receiving recycled dough cutting scrap that are left after pizza sections are cut from the dough web. Commonly the extruded dough web is extruded onto an endless belt conveyor system and can optionally be sheeted to a precise width and depth. A variety of patents discuss extrusion and sheeting of dough material such as U.S. Patent Nos. 3,276,397, 3,973,895, 4,046,940, 4,056,346, 4,113,412, 4,113,819, 4,192,636 and 4,266,920, each of which are hereby incorporated by reference herein.

### Laminating Fat Addition

Onto the sheeted dough web is placed a layer or sprinkling of fat. Fat substances that can be used are food grade solid or liquid fatty substances which are suitable to separate laminate layers of dough in the finished pizza shell. Examples of fat that can be useful in forming the laminate structure include butter, margarine, corn oil, soybean oil, coconut oil, peanut oil, lard, etc. Polyunsaturated, partly saturated, or highly saturated fats can be used. Solid fats can be melted and can be extruded onto a sheet as a plastic mass or deposited onto the sheet in drops. Preferably, solid fat can be formed into chips having approximate dimensions of about 1 to 5 millimeters in depth and about 2 to 10 millimeters in diameter or on the side. Solid chipped fat can be sprinkled onto the dough web using a variety of solid deposition means. Fats which are liquid at room temperature can be extruded, painted, dropped or sprayed onto the dough web. Sufficient fat is applied to the dough web to result in the formation of a laminate structure after baking. Up to about 3 to 18 parts of fat per each 90 parts of dough, preferably 3 to 15 parts of fat per each 90 parts of dough, most preferably about 9 to 11 parts of fat per each 90 parts of dough, can be used to conserve fat and to improve taste and texture.

## Rolling the Dough

After the fat is introduced onto the surface of the dough web, the dough web can be rolled into a one or two rolled form. The dough can be rolled using a variety of methods. One preferred method is to roll the dough using a roller mechanism placed over the conveyor of the dough web. The roller mechanism is placed at an angle across the conveyor so that one corner of the leading edge of the dough web contacts the roller where, due to the action of the roller turning in a direction opposite of the conveyor the dough web is turned up and coiled back upon itself by the combined action of the moving belt and the rotating roller. It has been found in the practice of the present invention that the peripheral speed of the roller where it engages the dough is desirably somewhat greater than the linear speed of the dough conveyor. In this way the dough roll can be made with multiple layers. For example, if the speed of the belt is approximately 40 feet (about 12 m) per minute the speed of the roller may be in an angular measure greater than about 40 feet (about 12 m) per minute and can sometimes be as much as 60 feet (about 18 m) per minute or greater. Thus as the dough strip begins to be coiled by the joint action of the belt and the roller, the coiled dough will rotate due to the greater speed of the roller and the fact that the surface of the roller is adapted to provide adhesion between the roller and the dough web. Consequently, the dough web is coiled back upon itself faster than it can move along the conveyor, creating multiple layers.

As the dough sheet moves along in the direction of motion of the conveyor, the dough web is coiled throughout its width and the dough emerges from the roller as a multilayered continuous roll under the advancing influence of the belt. Preferably the speed of the belt and the speed of rotation of the belt roller can be adjusted so that the dough roll has from 2 to 7 layers of dough, preferably 3 to 5 layers of dough, most preferably for reasons of substantial lamination and optimum flakiness of the product about 4 to 5 layers of dough counting from the center to the outside of the roll along a radius. Alternatively, the dough web can be cut into individual lengths of dough which can be individually rolled.

In order to make a double roll of dough, two distinct rollers can be used on either side of the conveyor to produce a double roll in the center of the conveyor.

### Sheeting

After the dough is rolled, in order to reduce the roll to a laminated sheet, the dough roll can be sheeted into a continuous dough web having dimensions of about 20 to 60 inches (50 to 150 cm) in width and about 1/16 to 3/4 inch (about 1.5-20 mm) in depth. Sheeting is a common process in the production of dough materials. A variety of patents discuss sheeting of dough materials such as the patents discussed above in the extrusion section. The dough rolls can be sheeted using a variety of combinations of continuous conveyors, rollers, planetary sheeters, etc. A preferred sheeting method and apparatus is as follows. The dough roll on a continuous conveyor is introduced into a combination of a roller-planetary sheeter sheeting means where the precise width and thickness of the dough web is closely adjusted. The planetary sheeter (roller) comprises a plurality of smaller rollers arranged on the perimeter of two driven circular ends mounted on shafts. The individual rollers mounted on the circular ends are free to rotate and are not driven. The planetary rollers are arranged above a solid roller such that the gap between the planetary rollers and the solid roller defines the depth of the dough. Both the solid roller and the planetary roller revolve in the direction the dough moves. The rate of the solid roller is adjusted to match the speed the dough is conveyed through the sheeting means. The upper planetary roller is rotated at a substantially increased speed, about 50 to 75 revolutions per revolution of the lower roller, so that the planetary rollers contact the dough sheet repeatedly, reducing the thickness of the dough web gently. Since the depth of the dough web is substantially reduced in the sheeting operation, the rate the dough exits the sheeting means is substantially in excess of the rate the dough enters the sheeting means. Accordingly, the belt conveyors which remove the dough web from the sheeting means are maintained at a higher speed so that the dough is conveyed smoothly from the sheeting means without wrinkling or other distortions.

### Dough Lamination

After the dough web is sheeted to a precise depth, the dough web can again be formed into a plurality of layers with a laminating process rather than a rolling process. The lamination of the dough creates a multiplicity of laminate layers in the dough resulting from a combination of the rolling step and the instant lamination. The laminations can be created using a variety of different means. Lamina-

- 8 -

tions can be created by cutting the dough web into discrete sections and piling the sections creating a a dough piece having increased depth and a plurality of layers. Alternatively, the cut lengths can be placed on a continuous conveyor in a continually overlapping manner so that at any point along the conveyed overlapping dough mass there is a multiplicity of layers of dough. Preferably, the lamination is performed by continuously forming from an uncut dough sheet on a moving conveyor with a reciprocating conveyor a continually overlapping dough mass. The laminating overlap can be done either in the direction of travel of the conveyor or can be done in a direction across the conveyor, preferably at right angles (90°). The finished pizza crust can derive from the overlapping procedure from about 3 to 10 laminations, preferably 4 to 8 laminations for reasons of lightness and taste. It is understood that each layer formed in this lamination step also contains up to eight dough layers resulting from the rolling step. A variety of methods and apparatus for the lamination of dough sheets can be found in U.S. Patent Nos. 1,975,326, 2,076,657, 2,264,115, 2,627,822, 2,627,825, 2,823,625, 3,554,137, 3,698,309, 3,804,637, 3,851,084, 4,004,035, 4,023,475, 4,226,920, 4,276,317, 3,851,088, 3,953,613, which all are hereby incorporated by reference herein.

## Sheeting

After lamination of the web the laminated dough can be again sheeted to a closely controlled width and thickness. By sheeting the laminated dough the plurality of laminations formed in both the rolling and laminating steps are incorporated into a dough web having dimensions of about 1/16 to 3/4 inch (1.5 to 20 mm) in depth and about 20 to 40 inches (50 to 150 cm) in width.

## Cutting

The sheeted dough web is cut into pizza shaped sections using a variety of cutting means including roller cutters, pizza shaped pans having sharp edges or other means useful in forming the circular or essentially circular pieces.

Preferably, the diameter of the pizza sections can range from about 8 to 16 inches (20-40 cm) in diameter, however common pizza sizes are 8 inches (20 cm), 10 inches (25 cm), 12 inches (30 cm), 14 inches (35 cm) and 16 inches (41 cm). A preferred pizza size after cooking is approximately 10-1/2 inches (27.2 cm). In order to obtain a pizza of that size after baking, the raw dough is cut in sections measuring 10-3/4 inches in diameter. After the pizza sections are cut, they are baked at an elevated temperature from about 200° to 375° F. (95° to 190° C.) Baking of the dough results in a crust having mechanical strength, taste and mouth feel characteristics necessary for successful pizza crust. The baked shells are topped with tomato sauce, spices, cheeses, pizza condiments and are frozen and wrapped for sale.

The foregoing discussion is explanatory of the invention and the following Example comprises a preferred embodiment.

### Example I

The recipe for the laminate crust is:

| | |
|---|---|
| Flour | 54.93 parts by weight |
| Water | 25.82 parts by weight |
| Krystal Gold | 10.44 parts by weight |
| (margarine chips) | |
| Yeast | 4.39 parts by weight |
| Soybean oil | 2.20 parts by weight |
| Sugar | 1.10 parts by weight |
| Salt | 0.99 parts by weight |
| Melo-dough | 0.14 parts by weight |
| (dough conditioner) | |

Into an appropriate container is placed about 10% of the water heated to a temperature of about 80° F., the yeast and the sugar. The ingredients are mixed until uniform and maintained at 80° F. for 30 minutes in order to insure the yeast has been fully activated. The activated yeast mixture is transferred into a large Peerless ribbon horizontal mixture and the flour, salt, dough conditioner, soybean oil and balance of the water is added. The mixer is operated for a total of 5 minutes, 3 minutes at the fast speed and 2 minutes at the slow speed so that the dough becomes workable and shortened but not tough.

The dough is removed from the blender and is placed in an extruder having dual counterrotating screws which extrudes the dough in a rough web having dimensions of 30 inches (76.2 cm) in width and 3/4 inch (19 mm) in depth. Margarine chips (Krystal Gold - Durkee Company) were sprinkled on the rough dough web in an amount of 10.44 parts of margarine per 90 parts of dough. The rough dough web carrying the margarine chips is contacted with a 3 inch (7.6 cm) teflon coated roller positioned at a 45° angle across the conveyor, rotating at a direction opposite to the path of the dough web at a rate about 4 times the linear speed of the conveyor. The dough is formed into a roll having 4 layers counting along a radius from the center to the outside or having 8 layers on a diameter. The dough roll is sheeted using a solid lower roll and an orbital roller having a plurality of smaller rollers positioned between circular end plates mounted on shafts to permit the free rotation of the smaller rollers. The orbital roller was operated at a speed of about 50 revolutions per each one revolution of the solid lower roller. The dough roll is sheeted to a sheet 1/8 inch (3.2 mm) thick and 30 inches (76.2 cm) in width. The sheeted dough is carried from the conveyor and inverted ontooo a second conveyor disposed at right angles below the first. The second conveyor has an end which oscilates perpendicularly in a plane across and above a third conveyor positioned below the end of the. oscilating conveyor. The continuous dough web is conveyed by the oscilating end and is deposited below onto a conveyor in an overlapping pattern created by the oscilating motion of the second conveyor and the slow motion of the receiving conveyor. The speed of the conveyor transporting the overlapped continuous web of dough is adjusted so that about 8 layers of dough is formed. After lamination the overlapped web is transported by a conveyor to a sheeter producing a

- 11 -

laminated dough sheet having a depth of 1/8 inch (3.2 mm) and a width of 30 inches (76.2 cm). The sheeted dough is conveyed by the belt to a rotary cutter which cuts the sheet into pizza sections having a diameter of 10-3/4 inches (27.2 cm) and a depth of 1/8 inch (3.2 mm). The cutting scrap is returned to the extruder and the shells are baked. The baked shells have sufficient mechanical integrity to support the toppings and wrapping process, is freezable and upon reheating has a light delicate laminated texture which is pleasing, tasty, and can be baked to a golden brown color.

The above Example and description is illustrative of the invention, however since many variations and embodiments of the invention can be made without departing from its spirit and scope, the invention resides wholly in the claims hereinafter appended.

CLAIMS

1.    A laminate pizza shell which comprises the product of the process of:

(a)    forming a first sheet of a leavened dough,

(b)    applying a lamination providing amount of fat to form a fat coated sheet,

(c)    forming the fat coated sheet into a dough roll,

(d)    forming a second sheet from the dough roll,

(e)    forming a laminate having from about 3 to about 10 laminations from the second sheet,

(f)    forming a third sheet of dough from the laminate,

(g)    cutting the third sheet of dough into pizza shaped sections.

2.    The laminate pizza crust of claim 1 wherein the leavened dough of 1(a) is made by first forming a beer of yeast, sugar, and water at a yeast-activating temperature, activating the yeast, and adding the additional ingredients.

3.    The laminate pizza crust of claim 2 wherein the yeast beer is maintained at a pH less than about 6.0.

4.    The laminate pizza crust of claim 1 wherein the first sheet has dimensions of about 50 to 150 cm in width and 3 to 25 mm in thickness.

5.    The laminate pizza crust of claim 4 wherein the first dough sheet has dimensions of about 60 to 90 cm in width and 5 to 13 mm in thickness.

6.    The laminate pizza crust of claim 1 wherein in step 1 (b) fat is applied, to form a fat coated sheet, in quantities of about 3 to 15 parts of fat per each 90 parts of dough.

7.    The laminate pizza crust of claim 6 wherein the fat is in the form of chips.

8.    The laminate pizza crust of claim 7 wherein the fat chips have dimensions of about 1 to 5 mm in depth and about 2 to 10 mm on a side.

9.    The laminate pizza crust of claim 1 wherein the dough roll formed in step (c) comprises a single roll having from about 2 to 7 layers of dough on a radius.

10. The laminate pizza crust of claim 1 wherein the dough roll sheets formed in step 1 (c) comprises a double roll, each roll having from about 2 to about 7 layers of dough on a radius.

11. The laminate pizza crust of claim 1 wherein the second sheet formed in step 1 (b) has dimensions of about 50 to 150 cm in width and about 1.5 to 20 mm in depth.

12. The laminate pizza crust of claim 1 wherein the laminate formed in step 1 (e) is formed by conveying the second dough sheet in an oscillating manner onto a conveyor such that the oscillating motion forms a continuously overlapping web of dough, wherein at any point along the continuously overlapping web of dough from about 3 to 10 laminations are formed.

13. The laminate crust of claim 12 wherein at any point along the continuously overlapping web of dough from about 4 to 8 laminations are formed.

14. The laminate pizza crust of claim 1 wherein the third sheet of dough formed from the laminate has dimensions of about 50 to 150 cm in width and a thickness of about 1.5 to 20 mm in depth.

15. The laminate pizza crust of claim 1 wherein the pizza shaped sections cut in step 1 (g) are cut with a rolling cutter and have dimensions from about 20 to 40 cm in diameter.

16. The laminate pizza crust of claim 15 wherein the pizza shaped sections have a diameter selected from the group consisting of 25 cm, 30 cm, 36 cm, or 41 cm.

17. A baked laminate pizza shell which comprises the product of the process of maintaining the laminate pizza shell of claim 1 at a temperature of about 95 to 200° C. for a period of time of about 2 to 20 minutes.

18. A pizza which comprises the baked laminate pizza shell of claim 17 with pizza topping.

-14-

19. A process for making a laminate pizza shell from leavened dough, characterized in that the process comprises:

a) forming a first sheet from the leavened dough;

b) applying a lamination providing amount of fat to form a fat coated sheet

c) forming the fat coated sheet into a dough roll,

d) forming a second sheet from the dough roll,

e) forming a laminate having from about 3 to about 10 laminations from the second sheet,

f) forming a third sheet of dough from the laminate,

g) cutting the third sheet of dough into pizza shaped sections.